# EUROPEAN PATENT APPLICATION

(11) **EP 1 330 069 A2**
(43) Date of publication of application: **23.07.2003**
(21) Application number: 03001206.6
(22) Date of filing: 17.01.2003
(51) Int. Cl.: H04L 12/18, H04L 12/56, H04Q 11/04

(54) **Method and device for multicast group management**

(30) Priority: 18.01.2002 US 51259
(71) Applicant: ALCATEL, 75008 Paris (FR)
(72) Inventor: Keller-Tuberg, Stefan, Kareela, NSW 2232 (AU)
(74) Representative: Dreiss, Fuhlendorf, Steimle & Becker

(57) **Abstract**

A method for simulating leaf initiated join (LIJ) multipoint connection functionality in an asynchronous transfer mode (ATM) network that does not intrinsically support LIJ multipoint connection functionality is disclosed herein. The method includes preparing a purpose-defined message designating an intent of a prospective leaf node to join an existing point-to-multipoint tree for receiving a stream of information from a root node of the existing point-to-multipoint tree. After preparing the purpose-defined message, the purpose-defined message is transmitted from the prospective leaf node for reception by the root node. A root initiated join (RIJ) setup message is received in response to transmitting the purpose-defined message.

## Description

### FIELD OF THE DISCLOSURE

The disclosures made herein relate generally to packet-based communication networks and more particularly to simulating leaf initiated joins multipoint connection functionality.

### BACKGROUND

ATM networks often support a capability of providing point-to-multipoint connections. Point-to-multipoint connections have the characteristic of simultaneously carrying traffic originating from a single node known as a root to a plurality of recipient nodes known as leafs. In a typical configuration, an ATM network may be configured with a plurality of independent point to multipoint connections, each having a single root and a plurality of leaf nodes.

Root Initiated Join (RIJ) and Leaf Initiated Join (LIJ) are two types of multipoint connection functionality for initiating the addition of multipoint connections (i.e. joining additional leaf nodes) within an existing ATM point-to-multipoint tree. In certain types of application, LIJ multipoint connection functionality is known to offer advantages over RIJ multipoint connection functionality that result in simpler application implementations and more efficient use of network resources. However, RIJ multipoint connection functionality is the current industry standard for joining one or more additional ATM nodes with an existing ATM point-to-multipoint tree. Furthermore, many ATM node elements (e.g. server, workstation, Digital Subscriber Line Access Multiplexer, a router, etc.) support RIJ multipoint connection functionality, but not LIJ multipoint connection functionality.

Implementation of LIJ multipoint connection functionality is presently not practical for a number of reasons, including the following reasons. Although a specific solution for LIJ multipoint connection functionality was defined within the ATM Forum and ITU domains within UNI 4.0. (UNI signalling 4.0 af-sig-0061.000 July, 1996), LIJ functionality was never adopted in the PNNI (Private Network to Network Interface used for inter switch signalling) and because LIJ could therefore not practically be implemented in a network based on approved standard signalling protocols, support for LIJ was subsequently removed from the draft UNI 4.1 standard. An additional problem is that many network elements support earlier signalling functionality (for example, based on UNI 3.1 or earlier), but do not have the capability for supporting LIJ multipoint connection functionality.

When an ATM node in an ATM network intends to join an existing ATM point-to-multipoint tree as a leaf node so that it can start to receive the stream of information from the ATM root node, the prospective ATM leaf node is required to communicate this intention for reception by the network and/or ATM root node. Presently, a considerable majority of deployed ATM network elements (i.e. ATM nodes) or the networks to which they are connected do not support LIJ multipoint connection functionality. Accordingly, an ATM node that intends to join the ATM point-to-multipoint tree must communicate its intention using a signalling mechanism that is compatible with existing ATM network elements.

Therefore, simulating leaf initiated join multipoint connection functionality in a network comprising network elements that do not intrinsically support LIJ multipoint connection functionality is useful.

### BRIEF DESCRIPTION OF THE DRAWINGS

FIG. 1 is a block diagram view depicting an ATM network capable of supporting simulated leaf initiated join multipoint connections in accordance with an embodiment of the disclosures made herein, wherein the network includes a core network of ATM switches that support ATM switched virtual circuit signalling (including root initiated join multipoint connections).
FIG. 2 is a block diagram view depicting an ATM point-to-multipoint tree comprising network elements of the ATM network depicted in FIG. 1.
FIG. 3 is a flow chart view depicting a method for simulating leaf initiated join multipoint connections in accordance with an embodiment of the disclosures made herein.

### DETAILED DESCRIPTION OF THE FIGURES

The disclosures made herein relate to various aspects of simulating leaf initiated join (LIJ) multipoint connections in a communication network (e.g. an Asynchronous Transfer Mode network) that does not intrinsically support LIJ multipoint connections. By facilitating LIJ multipoint connections, a prospective leaf node of a network may initiate joining with an existing point-to-multipoint tree. Such ability for a prospective leaf to initiate joining with an existing point-to-multi tree is useful in multicast applications where a root node does not know a-priori which of the prospective leaf nodes will request to receive an information stream being transmitted by the root node of the existing point-to-multipoint tree and when the prospective leaf nodes will make these requests. Once the prospective leaf node is joined with the existing point-to-multipoint tree, the resulting point-to-multipoint tree will appear to be the same tree that would have resulted if the network and its nodes would have supported LIJ multipoint connections.

In accordance with embodiments of the disclosures made herein, asynchronous transfer mode (ATM) switched virtual circuit (SVC) LIJ multipoint connections may be implemented for any ATM node and associated ATM network that supports RIJ multipoint connections without requiring upgrade of SVC capabilities of the ATM node or ATM network. Furthermore, such embodiments of the disclosures made herein permit ATM switched virtual circuit (SVC) LIJ multipoint connections to be implemented without the need for further SVC standardization activities. Accordingly, a prospective leaf node may initiate and facilitate being added to an existing ATM point-to-multipoint tree without the requirement that the ATM network and network elements thereof support LIJ multipoint connections.

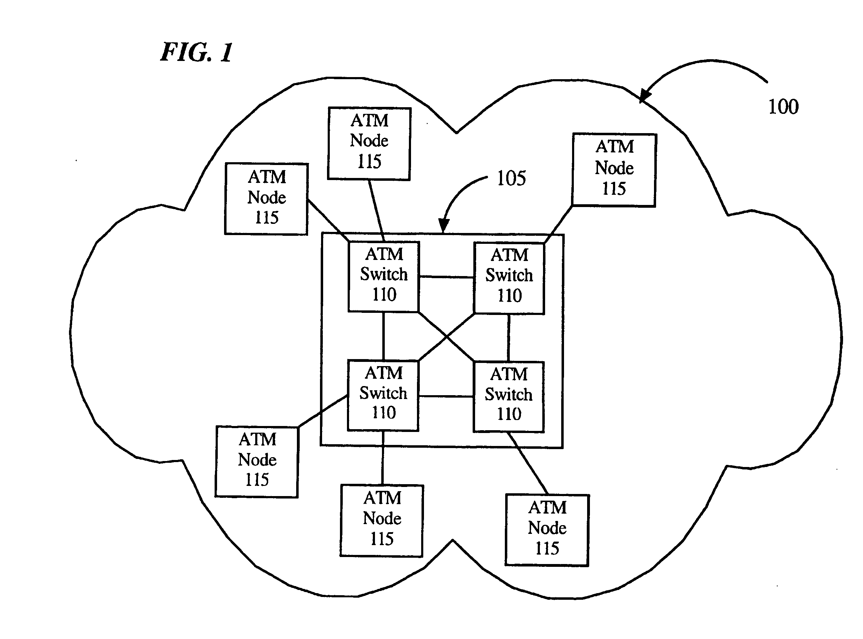

FIG. 1 is an ATM SVC network (hereinafter referred to as the ATM network 100) capable of supporting simulated leaf initiated join multipoint connections in accordance with an embodiment of the disclosures made herein. The ATM network 100 includes a core network 105 of ATM switches (i.e. a plurality of ATM switches 110) and a plurality of ATM nodes 115. Each one of the ATM nodes 115 is connected to a corresponding one of the ATM switches 110. Examples of each one of the ATM nodes 115 include a digital subscriber line access multiplexer (DSLAM), a workstation or server supporting an ATM interface and a gateway such as an IP router that interconnects a non-ATM network with an ATM network.

The core network 105 of ATM switches 110 is interconnected so that traffic paths may be established from any one of the ATM switches 110 of the core network 105 to any other one of the ATM switches 110 in the core network 105. Traffic paths between two of the ATM nodes 115 may be direct if such two of the ATM nodes 115 are directly interconnected, or indirect through one or more of the ATM switches 110 if such two ATM nodes 115 are not directly interconnected.

The ATM core network 105 supports ATM root initiated join (RIJ) multipoint connection functionality. However, the ATM network 100 does not support ATM leaf initiated (LIJ) multipoint connection functionality. Embodiments of the disclosures made herein enable ATM LIJ multipoint connection functionality to be facilitated on ATM RIJ-capable networks that do not support ATM LIJ multipoint connection functionality (e.g. the network 100).

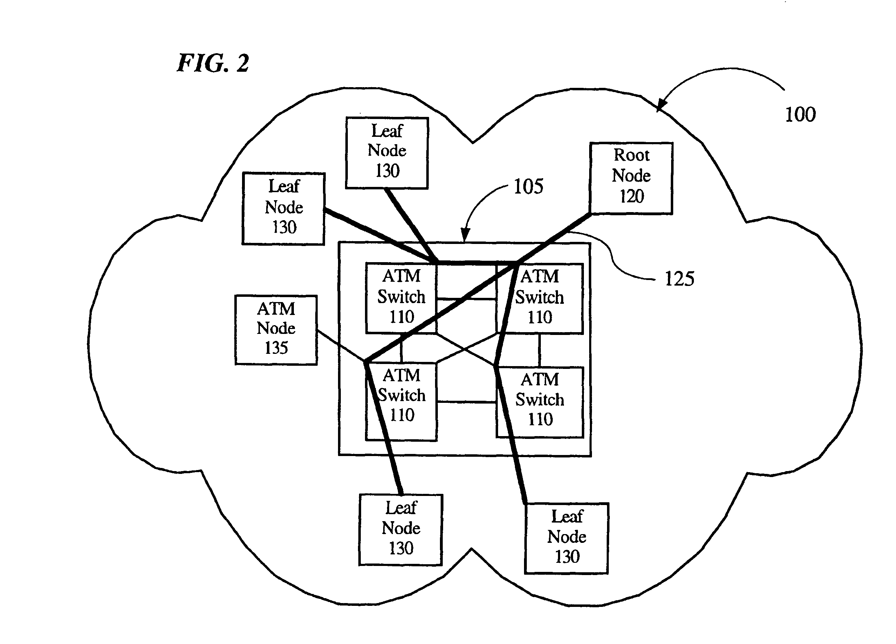

As depicted in FIG. 2, one of the ATM nodes 115 in the ATM network 100 depicted in FIG. 1 is a root node 120 of an ATM point-to-multipoint tree 125. A plurality of other ATM nodes 115 in the ATM network 100 are existing leaf nodes 130 of the ATM point-to-multipoint tree 125. A prospective leaf node 135 is one of the ATM nodes 115 that is usually not the root node 120 or one of the existing leaf nodes 130 of the ATM point-to-multipoint tree 125. The prospective leaf node 135 and the root node 120 both support Internet Protocol and ATM SVC functionality.

An example of an application for the ATM point-to-multipoint tree 125 is the distribution of IP multicast streams. In such an example, the root node 120 of the point-to-multipoint tree 125 may be a video or multicast file server. The root node 120 may also be a gateway device that links the ATM network 100 with an Internet Protocol (IP) network, wherein the original source of the video or multicast file reside within the IP network.

At a point in time after the ATM point-to-multipoint tree 125 (rood node and/or leaf nodes) is established, the prospective leaf node 135 intends to join the ATM point-to-multipoint tree 125 for receiving a stream of information being transmitted from the root node 120 of the ATM point-to-multipoint tree 125. To this end, the prospective leaf node 135 needs to communicate its intention to join the ATM point-to-multipoint tree 125.

Because the ATM network 100 and nodes thereof do not support ATM LIJ multipoint connection functionality, the prospective leaf node 135 must communicate its intention using a different signalling mechanism than defined in the ATM Forum UNI protocols and ITU-T Q.2931. In accordance with an embodiment of the disclosures made herein, the prospective leaf node 135 communicates its intention to join the existing ATM point-to-multipoint tree 125 by transmitting a purpose-defined message for reception by the root node 120 of the existing point-to-multipoint tree 125.

In accordance with one embodiment of the disclosures made herein, the purpose-defined message includes variable information for enabling the leaf node 135 to receive a stream of information being transmitted by the root node 120. Examples of such variable information include an identity of a multicast stream (e.g. a title, a stream number, an address, etc.) that the prospective leaf node 135 wants to receive, an identity of prospective leaf node (e.g. a network address, a device name, a device number, etc.) and a correlation identifier for enabling a request associated with the purpose-defined message to be correlated with an associated action by the root node 120 of the existing point-to-multipoint tree 125.

A message prepared and transmitted in accordance with User Datagram Protocol over Internet Protocol (i.e. UDP/IP purpose-defined signalling channel) is one embodiment of such a purpose-defined message. A message prepared and transmitted in accordance with Transmission Control Protocol over Internet Protocol (i.e. a TCP/IP purpose-defined signalling channel) is another embodiment of such a purpose-defined message. In view of the disclosures made herein, other embodiments of such a purpose-defined message will become apparent to one skilled in the art of communication protocols.

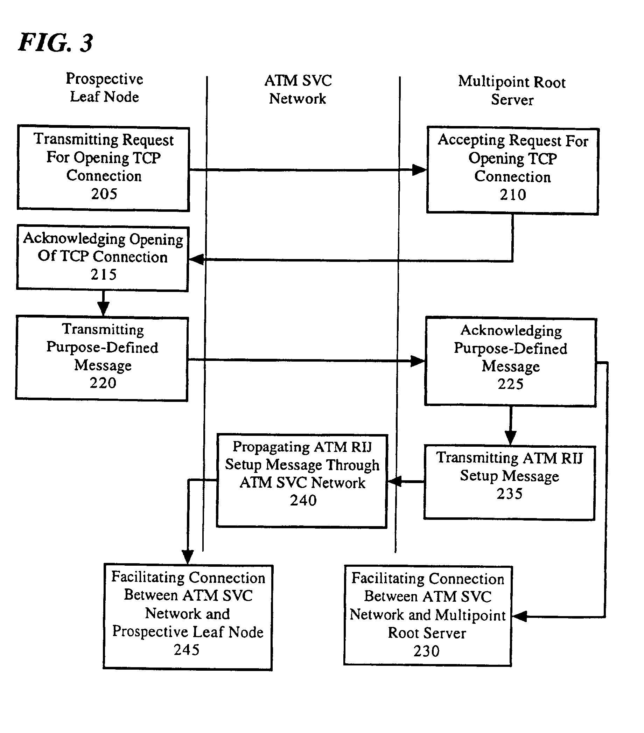

FIG. 3 depicts a method 200 for simulating leaf initiated join multipoint connections in accordance with an embodiment of the disclosures made herein. Referring to the method 200, an operation 205 is performed for transmitting a request for opening a TCP connection between a prospective leaf node (e.g. the prospective leaf node 135 depicted in FIG. 2) and a root node (e.g. the root node depicted in FIG. 2). In one embodiment, the request for opening the TCP connection is transmitted in response to an end user apparatus (e.g. an end user download device) transmitting a request for receiving a particular stream of information to the prospective leaf node. The request for opening the TCP connection is transmitted by the prospective leaf node for reception by the root node. The root node performs an operation 210 for accepting the request for opening the TCP connection. In response to performing the operation 210 for accepting the request, an operation 215 is performed by the prospective leaf node for acknowledging the opening of the TCP connection.

After the operation 215 is performed for acknowledging the opening of the TCP connection, an operation 220 is performed by the prospective leaf node for transmitting a purpose-defined message for reception by the root node. As disclosed above, one embodiment of the purpose-defined message includes variable information for enabling the leaf node to receive a stream of information being broadcast by the root node. In response to the root node receiving the purpose-defined message, an operation 225 is performed by the root node for acknowledging the purpose-defined message.

After acknowledging the purpose-defined message, the root node performs an operation 230 for facilitating a network connection between a switched virtual circuit (SVC) network and the root node. Also after acknowledging the purpose-defined message, the root node performs an operation 235 for transmitting a root initiated join (RIJ) setup message. The RIJ setup message is transmitted for reception by a switched virtual circuit (SVC) network. In the case where the SVC network is an ATM SVC network, the root node transmits the RIJ set-up message (i.e. an ATM RIJ set-up message) towards a local ATM switch of the root node. One or more network elements of the SVC network perform an operation 240 for propagating the RIJ set-up message through the SVC network for reception by the prospective leaf node. In response to the leaf node receiving the RIJ setup, the leaf node performs an operation 245 for facilitating a network connection between the SVC network and the leaf node.

It should be understood that in view of the disclosures made herein, other functionally equivalent embodiments of the method 200 will be contemplated by those skilled in the art of communication protocols and associated technologies. Accordingly, such other functionally equivalent embodiments of the method 200 may include different steps and/or sequence of steps than those depicted in FIG. 3. Such other functionally equivalent embodiments will include a purpose-defined message for communicating an intent of a leaf node for joining an existing point-to-multipoint tree. An example of an equivalent embodiment would be one in which an acknowledgement of the purpose-defined message is not provided for. In such an example, or if an acknowledgement is sent and subsequently lost, such methods may use a correlation value contained in a purpose-defined message rather than the acknowledgement to facilitate establishment of the LIJ multipoint connection. Still further functionally equivalent embodiments may comprise methodology enabling a leaf node to unambiguously derive a correlation by making assumptions concerning the circumstances in which the purpose-defined message was sent and the RIJ message that was subsequently received.

It is contemplated herein that the simulated LIJ multipoint connection functionality disclosed herein may applied for establishing the root node of a multipoint tree or for establishing the first leaf node in a multipoint tree. For example, when establishing a multipoint tree a root node must first be established and there and until the root node is established there are no leaf nodes. When the first leaf node is attached to the root node, the multipoint tree becomes a meaningful, if not trivial, network connection but it's still a "tree" prior to this.

In other embodiments of methods in accordance with embodiments of the disclosures made herein, such methods do not require that the multipoint tree, including the root node, be in existence before the purpose defined message is set. Assuming that all leaf nodes and the root node are configured a-priori with information about the available streams, the first LIJ message may be sent to the root before even the root has established its ATM connection to the network. In response to receiving this LIJ message, the root node would recognize that it must first establish an ATM root connection to the network and only then may it add the leaf that issued the LIJ message.

It should also be understood that method for simulating leaf initiated join multipoint connections in accordance with an embodiment of the disclosures made herein are generally not standards themselves. Rather, they are data processor programs (i.e. applications) that enable simulated LIJ multipoint connection functionality in accordance with an existing and deployed server-based technique for enabling one or more prospective leaf nodes to be joined with an existing point-to-multipoint tree. Such data processor programs would need to be deployed on at least the prospective leaf node and a target root node.

Referring now to data processor programs in accordance with an embodiment of the disclosures made herein, a data processor program controls at least a portion of the operations associated with simulating LIJ multipoint connection functionality in a network that does not inherently support LIJ multipoint connection functionality. In this manner, the data processor program controls at least a portion of the operations necessary to facilitate simulating LIJ multipoint connection functionality in a manner consistent with the disclosures made herein. The term data processor program is defined herein to refer to computer software, data processor algorithms or any other type of instruction code capable of controlling operations associated with a data processor. A microprocessor, a microcontroller and a central processing unit are examples of a data processor.

The data processor program is processible by a data processor of a root node and/or a leaf node of a point-to-multipoint tree. The data processor program may be resident on a network element comprising the root node and/or on a network element comprising a leaf node. Furthermore, the data processor program may be accessible by a data processor of a network element from a memory apparatus of the network element (e.g. RAM, ROM, virtual memory, hard drive memory, etc) or from a peripheral apparatus such as a diskette, a compact disk, a data storage device and the like.

A data processor program accessible from an apparatus by a data processor is defined herein as a data processor program product. It is contemplated herein that the data processor program product may comprise more than one data processor programs each accessible from respective apparatuses. It is further contemplated herein that each one of a plurality of data processor programs may be accessed by a different respective one of a plurality of data processors. For example, a first data processor and a second data processor (e.g. of a leaf node and a root note), respectively, may access a first data processor program and a second data processor program, respectively, from a first apparatus and a second apparatus (e.g. a first memory device and a second memory device), respectively.

In the preceding detailed description, reference has been made to the accompanying drawings that form a part hereof, and in which are shown by way of illustration specific embodiments in which the invention may be practiced. These embodiments, and certain variants thereof, have been described in sufficient detail to enable those skilled in the art to practice the invention. It is to be understood that other suitable embodiments may be utilized and that logical, mechanical, chemical and electrical changes may be made without departing from the spirit or scope of the invention. For example, functional blocks shown in the figures could be further combined or divided in any manner without departing from the spirit or scope of the invention. To avoid unnecessary detail, the description omits certain information known to those skilled in the art. The preceding detailed description is, therefore, not intended to be limited to the specific forms set forth herein, but on the contrary, it is intended to cover such alternatives, modifications, and equivalents, as can be reasonably included within the spirit and scope of the appended claims.

## Claims

1. A method for simulating leaf initiated join (LIJ) multipoint connection functionality, comprising:
preparing a purpose-defined message designating an intent of a prospective leaf node to join an existing point-to-multipoint tree for receiving a stream of information from a root node of the existing point-to-multipoint tree;
transmitting the purpose-defined message from the prospective leaf node for reception by the root node; and
receiving a root initiated join (RIJ) setup message in response to transmitting the purpose-defined message.

2. The method of claim 1 wherein preparing the purpose-defined message includes:
designating an identity of an information stream; and
designating an identity of the prospective leaf node.

3. The method of claim 2 wherein:
designating the identity of the information stream includes designating a network address of the information stream; and
designating the identity of the prospective leaf includes designating a network address of the prospective leaf node.

4. The method of claim 2 wherein:
preparing the purpose-defined message includes specifying a correlation identifier;
receiving the root initiated join (RIJ) setup message includes receiving a reference to the correlation identifier; and
the correlation identifier enables the RIJ setup message to be associated with the purpose-defined message.

5. The method of claim 1, further comprising:
establishing a network connection with the root node of the existing point-to-multipoint tree prior to transmitting the purpose-defined message.

6. The method of claim 5 wherein establishing the network connection includes:
transmitting a request for opening a network connection from the prospective leaf node for reception by the root node; and
receiving an acceptance of the request, wherein the acceptance is transmitted by the root node for reception by the prospective leaf node.

7. The method of claim 1, further comprising:
receiving acknowledgement of the purpose-defined message after transmitting the purpose-defined message.

8. The method of claim 1, further comprising:
facilitating a purpose-defined signaling channel between the root node and the prospective leaf node, wherein the purpose-defined message is transmitted over the purpose-defined signaling channel.

9. The method of claim 1 wherein receiving the root initiated join (RIJ) setup message includes receiving the RIJ setup message from a network switch of the existing point-to-multipoint tree.

10. A method for simulating leaf initiated join (LIJ) multipoint connection functionality, comprising:
preparing a purpose-defined message designating an intent of a prospective leaf node to join an existing point-to-multipoint tree for receiving a stream of information from a root node of the existing point-to-multipoint tree, wherein the purpose defined message designates an identity of an information stream and
an identity of the prospective leaf node;
facilitating a purpose-defined signaling channel between the root node and the prospective leaf node; transmitting the purpose-defined message from the prospective leaf node for reception by the root node, wherein the purpose-defined message is transmitted over the purpose-defined signaling channel; and
receiving a root initiated join (RIJ) setup message in response to transmitting the purpose-defined message.

11. A data processor program product for simulating leaf initiated join (LIJ) multipoint connection functionality, comprising:
a data processor program processable by a data processor of a network element;
an apparatus from which the data processor program is accessible by the data processor; and
the data processor program being capable of enabling the data processor to facilitate:
preparing a purpose-defined message designating an intent of a prospective leaf node to join an existing point-to-multipoint tree for receiving a stream of information from a root node of the existing point-to-multipoint tree;
transmitting the purpose-defined message from the prospective leaf node for reception by the root node; and
receiving a root initiated join (RIJ) setup message in response to transmitting the purpose-defined message.

12. The data processor program product of claim 11 wherein enabling the data processor to facilitate preparing the purpose-defined message includes enabling the data processor to facilitate:
designating an identity of an information stream; and
designating an identity of the prospective leaf node.

13. The data processor program product of claim 12 wherein:
enabling the data processor to facilitate designating the identity of the information stream includes enabling the data processor to facilitate designating a network address of the information stream; and
enabling the data processor to facilitate designating the identity of the prospective leaf node includes enabling the data processor to facilitate designating a network address of the prospective leaf node.

14. The data processor program product of claim 12 wherein:
enabling the data processor to facilitate preparing the purpose-defined message includes enabling the data processor to facilitate specifying a correlation identifier;
enabling the data processor to facilitate receiving the root initiated join (RIJ) setup message includes enabling the data processor to facilitate receiving a reference to the correlation identifier; and
the correlation identifier enables the RIJ setup message to be associated with the purpose-defined message.

15. The data processor program product of claim 11 wherein the data processor program is further capable of enabling the data processor to facilitate:
establishing a network connection with the root node of the existing point-to-multipoint tree prior to transmitting the purpose-defined message.

16. The data processor program product of claim 15 wherein enabling the data processor to facilitate establishing the network connection includes:
enabling the data processor to facilitate transmitting a request for opening a network connection from the prospective leaf node for reception by the root node; and
enabling the data processor to facilitate receiving an acceptance of the request, wherein the acceptance is transmitted by the root node for reception by the prospective leaf node.

17. The data processor program product of claim 11 wherein the data processor program is further capable of enabling the data processor to facilitate:
receiving acknowledgement of the purpose-defined message after transmitting the purpose-defined message.

18. The data processor program product of claim 11 wherein the data processor program is further capable of enabling the data processor to facilitate:
establishing a purpose-defined signaling channel between the root node and the prospective leaf node, wherein the purpose-defined message is transmitted over the purpose-defined signaling channel.

19. The data processor program product of claim 11 wherein enabling the data processor to facilitate receiving the root initiated join (RIJ) setup message includes enabling the data processor to facilitate receiving the root initiated join (RIJ) setup message from a network switch of the existing point-to-multipoint tree.

20. A system for simulating leaf initiated join (LIJ) multipoint connection functionality, comprising:
a plurality of network elements connected within an Asynchronous Transfer Mode (ATM) capable network;
an existing point-to-multipoint tree within the ATM capable network, wherein the point-to-multipoint tree includes a root node and at least leaf node; and
a data processor program accessible by a prospective leaf node of the ATM capable network;
the data processor program being capable of enabling a data processor of the prospective leaf node to facilitate:
preparing a purpose-defined message designating an intent of a prospective leaf node to join the existing point-to-multipoint tree for receiving a stream of information from a root node of the existing point-to-multipoint tree;
transmitting the purpose-defined message from the prospective leaf node for reception by the root node; and
receiving a root initiated join (RIJ) setup message in response to transmitting the purpose-defined message.

21. The system of claim 20 wherein enabling the data processor to facilitate preparing the purpose-defined message includes enabling the data processor to facilitate:
designating an identity of an information stream; and
designating an identity of the prospective leaf node.

22. The system of claim 21 wherein:
enabling the data processor to facilitate designating the identity of the information stream includes enabling the data processor to facilitate designating a network address of the information stream; and
enabling the data processor to facilitate designating the identity of the prospective leaf node includes enabling the data processor to facilitate designating a network address of the prospective leaf node.

23. The system of claim 21 wherein:
enabling the data processor to facilitate preparing the purpose-defined message includes enabling the data processor to facilitate specifying a correlation identifier;
enabling the data processor to facilitate receiving the root initiated join (RIJ) setup message includes enabling the data processor to facilitate receiving a reference to the correlation identifier; and
the correlation identifier enables the RIJ setup message to be associated with the purpose-defined message.

24. The system of claim 20 wherein the data processor program is further capable of enabling the data processor to facilitate:
establishing a network connection with the root node of the existing point-to-multipoint tree prior to transmitting the purpose-defined message.

25. The system of claim 24 wherein enabling the data processor to facilitate establishing the network connection includes:
enabling the data processor to facilitate transmitting a request for opening a network connection from the prospective leaf node for reception by the root node; and
enabling the data processor to facilitate receiving an acceptance of the request, wherein the acceptance is transmitted by the root node for reception by the prospective leaf node.

26. The system of claim 20 wherein the data processor program is further capable of enabling the data processor to facilitate:
receiving acknowledgement of the purpose-defined message after transmitting the purpose-defined message.

27. The system of claim 20 wherein the data processor program is further capable of enabling the data processor to facilitate:
establishing a purpose-defined signaling channel between the root node and the prospective leaf node, wherein the purpose-defined message is transmitted over the purpose-defined signaling channel.

28. The system of claim 20 wherein enabling the data processor to facilitate receiving the root initiated join (RIJ) setup message includes enabling the data processor to facilitate receiving the root initiated join (RIJ) setup message from a network switch of the existing point-to-multipoint tree.
